# FASCICULE DE BREVET EUROPEEN

(11) **EP 2 694 884 B1**
(45) Date de publication et mention de la délivrance du brevet: **19.06.2019**
(21) Numéro de dépôt: 12711670.5
(22) Date de dépôt: 04.04.2012
(51) Int. Cl.: F24S 20/20, F24S 10/70, B01J 19/12, B01J 12/00

(54) **SYSTÈME SOLAIRE PERMETTANT DE REPRODUIRE L'EFFET D'UNE FLAMME DE COMBUSTION**
SOLARSYSTEM ZUR REPRODUKTION DER WIRKUNG EINER VERBRENNUNGSFLAMME
SOLAR SYSTEM FOR REPRODUCING THE EFFECT OF A COMBUSTION FLAME

(30) Priorité: 04.04.2011 FR 1152862
(43) Date de publication de la demande: 12.02.2014
(73) Titulaire: Centre National de la Recherche Scientifique (C.N.R.S.), 75016 Paris (FR)
(72) Inventeur: RODAT, Sylvain, F-12630 Gages (FR); ABANADES, Stéphane, F-66210 Les Angles (FR); FLAMANT, Gilles, F-66800 Llo (FR)
(74) Mandataire: IPAZ
(86) Numéro de dépôt international: PCT/EP2012/056129
(87) Numéro de publication internationale: WO 2012/136689

(56) Documents cités:
- WO-A1-03/049853
- US-A- 4 164 123
- US-A1- 2010 237 291

## Description

### DOMAINE TECHNIQUE GENERAL

La présente invention concerne le domaine des systèmes solaires thermiques et thermochimiques à haute température.

Plus précisément, elle concerne un système solaire permettant un apport d'énergie volumique reproduisant à l'aide d'un fluide de transfert l'effet d'une flamme de combustion pour un processus industriel à haute température.

### ETAT DE L'ART

De nombreux processus industriels, par exemple le procédé au four pour la production du noir de carbone, nécessitent un fort apport d'énergie thermique dans un volume de matière à traiter. Les températures requises atteignent 2000°C.

Actuellement, ces hautes températures sont presque exclusivement produites par la combustion de ressources fossiles, en particulier des hydrocarbures. En effet la « flamme de combustion » est, avec le procédé plasma, l'une des seules façons d'obtenir un apport thermique dans un volume au niveau industriel. On désigne d'ailleurs sous le nom de « températures de flamme » les températures auxquelles sont soumis ces processus.

Ces techniques classiques ont fait leurs preuves, mais nécessitent au mieux une forte consommation électrique, sinon la consommation de ressources fossiles, et entraînent l'émission de gaz à effet de serre et/ou polluants (NOx, SOx, particules).

Il serait souhaitable de disposer d'une alternative à la flamme de combustion que l'on puisse obtenir uniquement à partir d'énergie renouvelable, et en particulier d'énergie solaire.

En effet, les systèmes solaires dits à concentration permettent la conversion d'un rayonnement solaire en énergie thermique, laquelle est généralement utilisée pour la production d'électricité.

L'un de ces systèmes à concentration est la centrale à tour. Un tel système est constitué d'une tour et d'un champ de miroirs mobiles appelés héliostats qui concentre le rayonnement sur une zone réduite au sommet de la tour.

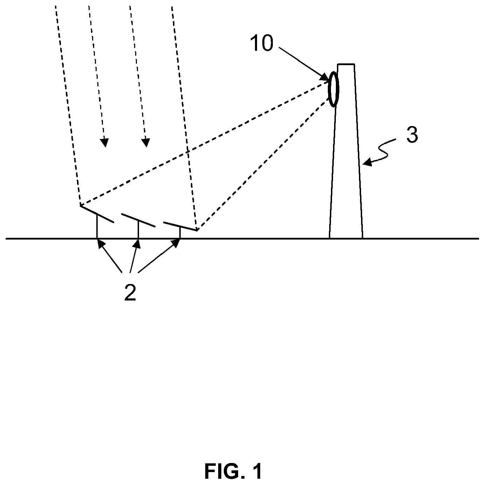

Cette zone éclairée par le rayonnement concentré reçoit plusieurs centaines de fois l'irradiation solaire directe, et est équipée d'un dispositif appelé récepteur solaire qui a pour fonction de transmettre cette énergie à un fluide (un liquide ou un gaz) qui y circule, généralement de la vapeur d'eau turbinée pour produire de l'électricité. On a ainsi représenté figure 1 une centrale thermodynamique à tour comprenant une tour 3, un champ d'héliostats 2, et le récepteur solaire 10.

Le récepteur solaire décrit dans la demande de brevet US 2010/0237291 est constitué d'une cavité traversée d'une pluralité de tubes dans lesquels circulent des composés chimiques qui peuvent réagir dans des réactions dites endothermiques, c'est-à-dire nécessitant des hautes températures habituellement mises en oeuvre sous l'effet d'une flamme de combustion (craquage du méthane par exemple). La paroi externe des tubes reçoit le rayonnement solaire concentré, ce qui la porte à haute température : les tubes jouent le rôle de paroi de transfert. Toutefois, l'apport thermique n'est pas volumique mais surfacique : la chaleur est transférée aux réactifs chimiques par contact avec la paroi interne des tubes. Cet apport thermique surfacique reproduit mal l'effet d'une flamme de combustion, puisque la réaction chimique a lieu principalement au niveau des parois. Cela diminue le rendement et entraîne l'apparition puis la croissance de dépôts de résidus solides sur les parois (en l'occurrence du carbone pur dans le cas d'un procédé de craquage), ce qui rend rapidement le récepteur inutilisable : les dépôts font chuter l'apport thermique et obstruent les tubes.

Alternativement la demande de brevet internationale WO 03/049853 propose un récepteur solaire étanche (un hublot permet de laisser rentrer le rayonnement solaire concentré), dans lequel circulent directement les composés chimiques à chauffer. Un nuage de microparticules solides absorbantes (de la fumée de noir de carbone par exemple) est mis en suspension dans le récepteur. Ce sont ces particules qui sont irradiées par le rayonnement solaire concentré, et diffusent l'énergie thermique qu'elles reçoivent pour mettre en oeuvre la réaction endothermique. L'apport thermique est cette fois ci bien volumique (rigoureusement, l'échange thermique a lieu sur la surface des particules, mais de par la diffusion relativement uniforme des particules dans le volume, il est assimilable à un apport thermique volumique), et reproduit mieux l'effet d'une flamme de combustion. Toutefois les performances de ce type de récepteur solaire restent très limitées : en effet, les particules ont rapidement tendance à se déposer sur le hublot et à l'opacifier. Récupérer les produits de la réaction est en outre complexe car il faut filtrer les gaz obtenus pour isoler et récupérer les microparticules sans contaminer les produits. L'intérêt industriel est donc faible.

Les technologies actuelles n'offrent ainsi pas encore d'alternative solaire industrielle viable à la flamme de combustion pour les processus industriels à haute température.

### PRESENTATION DE L'INVENTION

Selon un premier aspect, la présente invention se rapporte donc à un système solaire permettant un apport d'énergie volumique reproduisant l'effet d'une flamme de combustion pour un processus industriel à haute température, comprenant un récepteur solaire exposé à un rayonnement solaire concentré, caractérisé en ce qu'il comprend un fluide (liquide ou gazeux) caloporteur porté à haute température ;
au moins une chambre haute température dans laquelle est mis en oeuvre ledit processus industriel à haute température ;
des moyens d'injection du fluide caloporteur depuis le récepteur solaire vers la chambre haute température, les moyens d'injection étant agencés et configurés pour injecter le fluide caloporteur sous la forme d'un jet gazeux reproduisant l'effet d'une flamme de combustion dans l'au moins une chambre haute température.

Selon d'autres caractéristiques avantageuses et non limitatives :
- le récepteur solaire comprend une cavité, la cavité étant pourvue d'une ouverture transparente au rayonnement solaire concentré, et d'au moins un élément d'absorption solaire irradié par le rayonnement solaire concentré à travers l'ouverture ;
- le ou les éléments d'absorption solaire sont des tubes et/ou des canaux tapissant au moins une paroi de la cavité ;
- le fluide caloporteur circule dans le ou les éléments d'absorption solaire, le fluide caloporteur étant porté à haute température par transfert thermique au contact de la surface interne des éléments d'absorption solaire ;
- le fluide caloporteur circule dans la cavité, l'ouverture étant recouverte d'un hublot transparent au rayonnement solaire concentré et étanche, et le fluide caloporteur étant porté à haute température par transfert thermique au contact de la surface externe du ou des éléments d'absorption solaire ;
- le récepteur solaire est traversé d'un canal dans lequel le fluide caloporteur est en mouvement, le fluide caloporteur étant porté à haute température par transfert thermique au contact de la surface interne d'une paroi du canal dont la surface externe est irradiée par le rayonnement solaire concentré ;
- le fluide caloporteur est injecté sous pression dans le récepteur solaire ;
- les moyens d'injection du fluide caloporteur dans la chambre haute température consistent en une conduite via laquelle le fluide caloporteur à haute température s'échappe du récepteur solaire vers la chambre haute température sous l'effet de la pression interne dans le récepteur solaire ;
- la pression dans la chambre haute température est inférieure à la pression dans le récepteur solaire, la forme de jet gazeux étant provoquée par la détente du fluide caloporteur en sortie des moyens d'injection ;
- la chambre haute température est un fourneau, et le processus industriel haute température est un procédé d'obtention de matériau métallique ou céramique ;
- la chambre haute température est un réacteur chimique, et le processus industriel haute température est une réaction chimique endothermique ;
- le fluide caloporteur comprend un gaz chimiquement inerte et/ou un réactif de ladite réaction chimique endothermique et/ou un produit de ladite réaction chimique endothermique ;
- au moins un réactif de ladite réaction chimique endothermique est injecté dans le réacteur haute température au niveau d'une zone d'injection du fluide caloporteur à haute température ;
- le système comprend une pluralité de chambres haute température étant chacune un réacteur chimique, les produits du n-ième réacteur étant injectés dans le n+1-ième réacteur.

Selon d'autres exemples :
- la cavité et le ou les éléments d'absorption solaire sont en céramique ou en graphite ;
- la température du fluide caloporteur à haute température est comprise entre 1000°C et 2500°C ;
- la réaction chimique endothermique est le craquage du méthane ;
- le fluide caloporteur est le dihydrogène, le méthane étant injecté dans le réacteur haute température.

Un deuxième aspect de l'invention concerne un procédé d'apport d'énergie volumique reproduisant l'effet d'une flamme de combustion pour un processus industriel à haute température, caractérisé en ce qu'il comprend des étapes de :
- irradiation d'un récepteur solaire dans lequel circule un fluide caloporteur par un rayonnement solaire concentré, de façon à porter le fluide caloporteur à haute température ;
- injection du fluide caloporteur depuis le récepteur solaire dans une chambre haute température sous la forme d'un jet gazeux reproduisant l'effet d'une flamme de combustion ;
- mise en oeuvre dudit processus industriel à haute température dans la chambre haute température sous l'effet de la flamme de combustion produite.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 précédemment décrite est un schéma d'une centrale solaire thermodynamique à tour connue ;
- la figure 2 est un schéma d'un mode de réalisation du système solaire selon l'invention ;
- la figure 3a est une vue en perspective d'un récepteur solaire utilisé par le système selon l'invention, et les figures 3b et 3c sont deux vues en coupes de deux modes de réalisation de ce récepteur solaire ;
- la figure 4 est un schéma d'un autre mode de réalisation du système solaire selon l'invention ;
- la figure 5 est un schéma d'un mode de réalisation particulièrement avantageux d'un récepteur solaire du système solaire selon l'invention ;
- la figure 6 est un schéma d'un mode de réalisation d'un collecteur du système solaire selon l'invention ;
- la figure 7 est un plan de circulation des fluides (logiciel Prosim®) dans un mode de réalisation particulièrement avantageux du système selon l'invention.

### DESCRIPTION DETAILLEE

### Architecture générale et principe

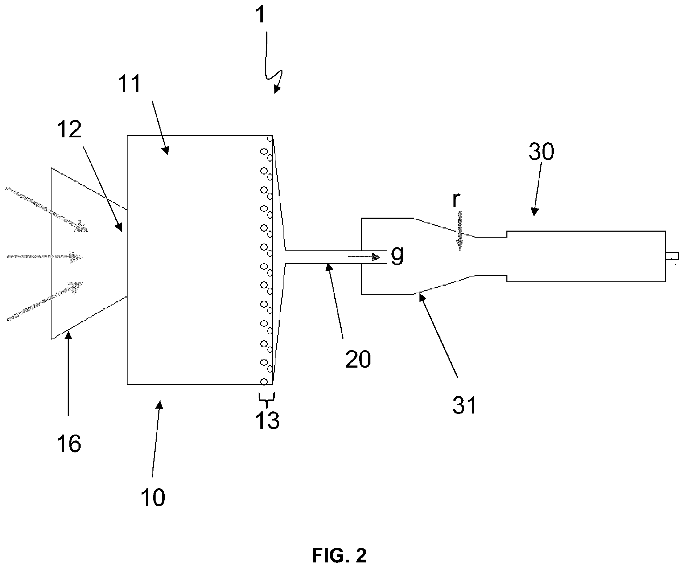

En référence aux dessins et tout d'abord à la figure 2, le système solaire 1 selon l'invention comprend trois parties principales : un récepteur solaire 10, une chambre haute température 30, et des moyens 20 d'injection de fluide depuis le récepteur solaire 10 vers la chambre haute température 30.

Les « hautes températures » dont on parlera dans la présente description correspondent à des températures qui ne peuvent quasiment être atteintes que grâce à une flamme de combustion ou du plasma, et non grâce à de simples résistances électriques. Ces hautes températures sont typiquement au dessus de 1000°C, et peuvent le cas échéant atteindre 2000°C voire 2500°C.

Comme l'on voit sur la figure 2, le récepteur solaire est exposé à un rayonnement solaire concentré. Comme expliqué précédemment, par concentration du rayonnement solaire on entend la focalisation sur une faible surface du rayonnement solaire reçu par une vaste surface en utilisant des systèmes optiques : champ de miroirs (héliostats), grand miroir parabolique, lentilles, etc. L'énergie reçue par le récepteur 10 est alors égale à l'énergie solaire totale incidente aux pertes optiques près, par exemple l'énergie captée par la surface totale du champ d'héliostats 2 dans la figure 1.

Un fluide caloporteur f circule dans le récepteur 10, ce fluide étant porté à haute température sous l'effet du rayonnement solaire concentré. Différents types de fluides et différentes géométries de récepteur seront décrites en détail plus bas.

La chambre haute température 30 est quant à elle le lieu d'un processus industriel à haute température. Comme il sera expliqué plus loin de nombreux processus industriels peuvent être mis en oeuvre dans le cadre de la présente invention, en particulier tout procédé nécessitant un apport d'énergie volumique, et spécialement si cet apport est généralement fait grâce à une flamme de combustion.

Le coeur de l'invention réside en l'injection, via les moyens 20 d'injection, du fluide caloporteur f sous la forme d'un jet gazeux g dans l'au moins une chambre haute température 30. En effet, une flamme n'est constituée que de gaz à haute température produits finaux ou produits intermédiaires de la réaction de combustion qui l'a engendrée (généralement CO2, H2O), l'aspect lumineux de la flamme étant dû à l'excitation d'électrons de ces gaz. Un jet gazeux à haute température peut donc être équivalent à une flamme de combustion. Ainsi, en injectant le fluide caloporteur f chauffé au niveau d'une fine ouverture de la chambre 30 à un débit suffisant, on simule un brûleur et on reproduit bien une flamme de combustion.

### Architecture de récepteur solaire

De nombreux types de récepteurs solaire 10 sont connus de l'homme de l'art. On notera que l'invention n'est limitée à aucun type de récepteur en particulier, mais qu'elle peut s'appliquer à tout récepteur qui soit apte à porter le fluide caloporteur f à haute température sous l'effet du rayonnement solaire concentré.

On va citer trois modes de réalisation avantageux et particulièrement adaptés.

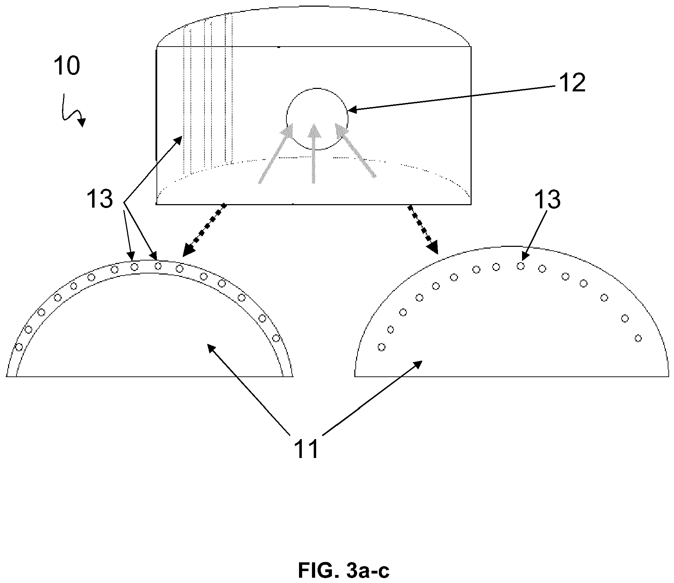

Dans le premier, conforme à la figure 3a par exemple, et dans le deuxième, le récepteur solaire 10 comprend une cavité 11, la cavité 11 étant pourvue d'une ouverture 12 transparente au rayonnement solaire concentré, et d'au moins un élément d'absorption solaire 13 irradié par le rayonnement solaire concentré à travers l'ouverture 12. Par ouverture, on entend toute « fenêtre » qui laisse passer le rayonnement solaire, qu'elle soit vitrée ou un simple trou dans la paroi du récepteur 10. L'ouverture 12 peut être entourée d'un cône collecteur 16 (concentrateur secondaire) en matériau réfléchissant, comme l'on voit sur la figure 2, ce cône permettant de concentrer encore plus précisément le rayonnement solaire concentré vers l'ouverture 12.

Les éléments d'absorption solaire 13 sont des éléments réfractaires qui vont chauffer sous l'effet du rayonnement solaire concentré. C'est au niveau de leur paroi que l'énergie solaire est effectivement transformée en chaleur. Le premier et le deuxième mode de réalisation mentionnés du récepteur 10 se différencient par la forme de ces éléments 13 et le schéma de circulation du fluide caloporteur f.

Dans ce premier mode de réalisation, comme l'on voit sur la figure 3b et respectivement sur la figure 3c, le ou les éléments d'absorption solaire 13 sont ainsi avantageusement des canaux et/ou des tubes tapissant au moins une paroi de la cavité 11, en particulier la paroi opposée à l'ouverture 12, c'est-à-dire la paroi exposée au rayonnement concentré. Ainsi, le fluide caloporteur f circule dans les éléments d'absorption solaire 13, et il est porté à haute température par transfert thermique au contact de la surface interne des éléments d'absorption solaire 13. Alternativement, les canaux et/ou tubes peuvent ne pas être placés contre une paroi de la cavité 11, ce afin de recevoir indirectement le rayonnement par réflexion sur les parois de la cavité 11.

La chaleur apparaît sur la paroi externe de ces tubes ou canaux, et se transmet par conduction jusqu'à la paroi interne, refroidie par le passage du fluide caloporteur. Dans la configuration « canaux », qui sont ménagés dans la matière constituant le fond de la cavité 11, on remarque qu'il y a une paroi externe commune à tous les canaux, laquelle est justement le fond de la cavité 11. Dans le cas de récepteurs solaires 10 parallélépipédiques ou semi-cylindriques, ce qui est le plus souvent le cas, cette paroi est sensiblement orthogonale à l'axe d'incidence du rayonnement solaire, et subit donc l'élévation de température maximale. Dans la configuration « tubes » (dans cette configuration les éléments d'absorption 13 sont formés de tubes distincts de la cavité 11), de multiples réflexions sur le fond de la cavité 11 font que toute la périphérie de la paroi externe des tubes est exposée.

La surface d'échange interne entre les tubes/canaux et le fluide caloporteur a quand à elle intérêt à être la plus élevée possible car les coefficients d'échanges conducto-convectifs à une interface solide-gaz sont faibles. Il est en outre inutile d'avoir des gros diamètres de tubes/canaux, car les échanges se font seulement sur la paroi. Avantageusement, on multiplie donc les tubes/canaux de faible diamètre (voire plus bas la description d'un mode de réalisation particulièrement préféré).

Les matériaux choisis sont des matériaux ultra-résistants aux hautes températures (capables de supporter pendant plusieurs heures 2000°C), mais relativement conducteurs de la chaleur. Les éléments d'absorption solaire 13 et plus particulièrement la cavité 11 sont donc choisis en céramique ou en graphite (point de sublimation à 3652°C). On peut envisager également des tubes en matériaux métalliques à haute température de fusion, bien que le graphite soit préféré.

Puisque le fluide caloporteur f est séparé de manière étanche de la cavité 11 par la paroi des tubes, la cavité 11 n'a le plus souvent pas besoin d'être hermétique. On peut se contenter d'un simple trou comme ouverture 12, mais avantageusement on l'équipe quand même d'une vitre afin d'isoler la cavité 11 de l'atmosphère oxydante, nocive en particulier au graphite. La cavité peut alors être remplie d'une atmosphère neutre (azote ou argon par exemple).

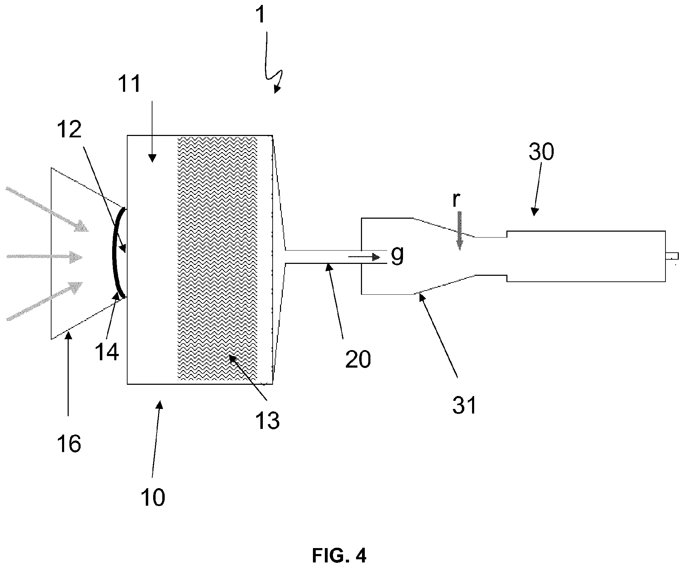

Alternativement, on peut faire circuler le fluide caloporteur f directement dans la cavité 11. L'ouverture 12 est alors obligatoirement fermée par un hublot 14 transparent au rayonnement solaire concentré, étanche et résistant à la pression. Dans ce deuxième mode de réalisation, le fluide f circule autour des éléments d'absorption thermique 13, et non à l'intérieur de ceux-ci. Le fluide est donc porté à haute température par transfert thermique au contact de la surface externe des éléments d'absorption solaire 13, toujours irradiés par le rayonnement solaire concentré à travers l'ouverture 12. Ce récepteur solaire 10 est visible sur la figure 4.

Il y a donc une plus grande liberté de formes pour les éléments d'absorption 13, et avantageusement on choisit des structures nid d'abeille , mousse poreuse, ou aérosols qui offrent une surface d'échange très élevée avec le fluide f. Ces structures occupent typiquement toute la section de la cavité, de façon à forcer le fluide caloporteur f à les traverser.

Les matériaux et les dimensions préférés sont sensiblement les mêmes que pour le premier mode de réalisation.

Selon le troisième mode de réalisation avantageux, on peut se passer de la cavité 11 et de l'ouverture 12. Le récepteur solaire 10 est en effet traversé d'un canal dans lequel le fluide caloporteur f est en mouvement, le fluide caloporteur f étant porté à haute température directement par transfert thermique au contact de la surface interne d'une paroi du canal dont la surface externe est irradiée par le rayonnement solaire concentré. Afin d'augmenter le transfert thermique, on peut recourir à des éléments générant des turbulences dans ce canal. Cette solution se rapproche beaucoup de la première avec canaux intégrés dans la cavité, il faut savoir qu'aux plus hautes températures une cavité sera nécessaire afin de diminuer les pertes thermiques par radiations infrarouge vers l'extérieur.

Un tel récepteur solaire surfacique à canal est notamment décrit dans la demande de brevet français FR0957204.

### Mode de réalisation particulièrement préféré du récepteur

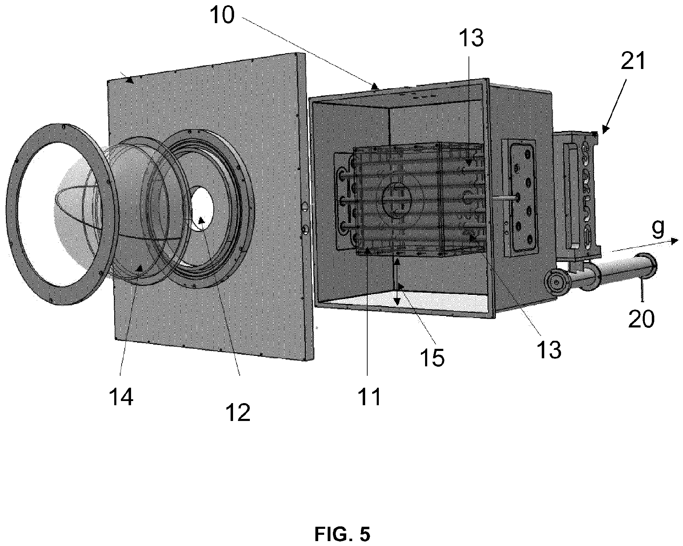

Un récepteur solaire 10 particulièrement avantageux développé par le laboratoire PROMES (Unité CNRS 8521), conforme au premier mode de réalisation du récepteur décrit précédemment, est représenté sur la figure 5. Ce récepteur multi-tubulaire expérimental a pu chauffer un fluide caloporteur f à une température de 2073°K.

Ce récepteur 10 est constitué d'une enveloppe en aluminium et d'une cavité réceptrice 11 en graphite sensiblement cubique (environ 40 cm de côté). L'ouverture 12 laissant entrer le flux solaire concentré présente un diamètre de 13 cm. Les tubes 13, au nombre de sept, font 800 mm de long pour un diamètre intérieur de 18 mm et un diamètre extérieur de 26 mm. Ils sont positionnés en quinconce horizontalement. Un hublot hémisphérique 14 en quartz de 360 mm de diamètre et 5 mm d'épaisseur permet d'isoler la cavité 11 de l'atmosphère oxydante. La zone 15 (globalement parallélépipèdique, avec un coté de l'ordre de 800 mm) entourant la cavité 11 est remplie de couches de matériaux isolants (par exemple des matériaux fibreux en alumino-silicate ou feutre de graphite) qui aident à maintenir la chaleur dans la cavité 11.

### Fluide caloporteur et injection

Par fluide, on entend un liquide ou un gaz en entrée du récepteur solaire 10, à condition toutefois qu'aux niveaux de haute température atteints en sortie du récepteur solaire 10 on ait atteint la température de vaporisation de sorte que le fluide caloporteur f puisse prendre la forme d'un jet gazeux g. Un fluide gazeux dans les CNTP (conditions normales de pression et de températures) est toutefois préféré puisqu'il n'y a pas de problème de changement d'état (consommation d'une enthalpie de vaporisation).

De très nombreux fluides sont utilisables, le choix dépend essentiellement du processus industriel pour lequel le fluide reproduit une flamme de combustion. En effet ce fluide doit soit être stable aux hautes températures nominales d'injection dans la chambre 30 et vis-à-vis des composants mis en jeu lors du processus, sous peine d'interférer avec ce processus, soit au contraire un constituant actif du processus dont l'impact est souhaité, par exemple un réactif d'une réaction chimique. En outre le fluide doit avantageusement présenter une bonne conductivité thermique afin d'emmagasiner rapidement de l'énergie thermique et/ou une capacité calorifique Cp élevée afin d'emmagasiner beaucoup d'énergie.

De façon générale, le dihydrogène (en l'absence de dioxygène) et l'hélium sont particulièrement avantageux pour leurs performances thermiques et leur stabilité. On peut mentionner également l'argon, le diazote, et envisager également l'utilisation de l'air ambiant pour son faible coût et sa disponibilité.

Pour pouvoir injecter le fluide caloporteur f dans la chambre haute température 30, les moyens d'injection 20 peuvent comprendre des systèmes de pompes, mais seuls des systèmes extrêmement chers et perfectionnés peuvent résister aux températures qui règnent en sortie du récepteur solaire 10.

C'est pourquoi on retourne avantageusement le problème en effectuant la montée en pression avant l'entrée dans le récepteur solaire 10, quand les niveaux de température sont encore bas : le fluide caloporteur f est injecté sous pression dans le récepteur solaire 10. Le niveau de pression doit être ajusté à la résistance mécanique des éléments du récepteur, en particulier les tubes 13 ou le hublot 14 s'il y en a. On peut néanmoins avantageusement monter à plusieurs bars.

Les moyens d'injection 20 du fluide caloporteur f dans la chambre haute température 30 consistent alors avantageusement en une simple conduite via laquelle le fluide caloporteur f à haute température s'échappe du récepteur solaire 10 vers la chambre haute température 30 sous l'effet de la pression interne dans le récepteur solaire 10. Le diamètre de cette conduite peut être ajusté en fonction de la pression et du débit de fluide dans le récepteur solaire de façon à ajuster la vitesse de gaz à haute température en sortie de la conduite (en d'autres termes la taille de flamme simulée) optimale pour le processus. Ainsi si Q est le débit, v la vitesse d'écoulement et S la surface d'une section de la conduite, *Q* = *vS.* En faisant l'hypothèse que le fluide obéit à la loi des gaz parfaits *PV* = *nRT,* on a *PQ* = *DRT* / *M,* avec D le débit massique souhaité, et M la masse molaire du fluide. On obtient *S* = *DRT* / *PvM.* Des exemples expérimentaux de valeurs intéressantes seront donnés plus loin, mais de façon générale des rayons de quelques centimètres sont intéressants, en particulier entre 1 cm et 10 cm.

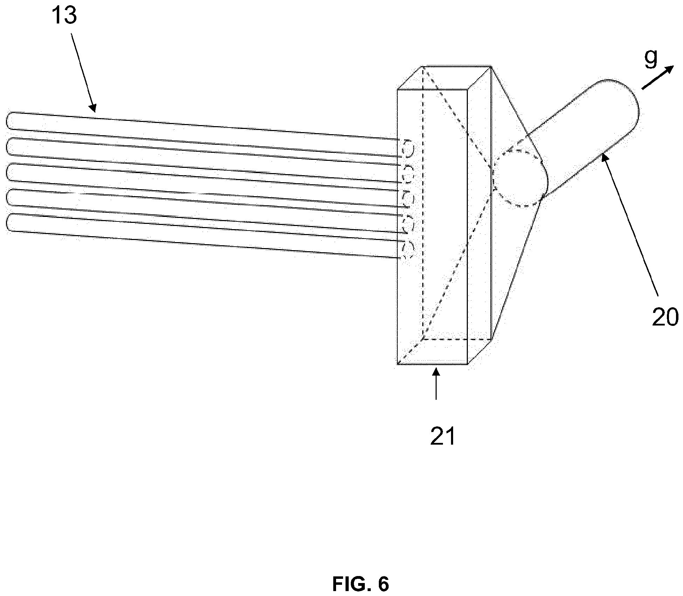

La connexion entre le récepteur solaire 10 et les moyens d'injection 20 peut se faire avantageusement au moyen d'un collecteur 21 tel que représenté sur la figure 6, en particulier si le récepteur solaire 10 est de type à tubes/canaux 13. On remarque qu'un collecteur 21 est également présent sur le récepteur de la figure 5.

Le collecteur 21 permet une zone de mélange afin d'homogénéiser la température (la configuration de la cavité 11 peut faire que les tubes 13 ne reçoivent pas tous la même quantité d'énergie) avant d'introduire le fluide à haute température dans la chambre haute température 30 via les moyens d'injection 20 (en particulier quand ceux-ci consistent en une conduite). Le graphite est un matériau adapté de par sa mise en forme aisée et sa tenue en température. On remarque sur la figure 6 une forme en pointe : l'hydrodynamique doit de façon particulièrement préférée favoriser des vitesses d'écoulement élevées (entre 0,3 et 0,8 Mach sont souhaités dans certains processus industriels) afin d'assurer un régime turbulent et un transport efficace des particules. Il va de soi que le collecteur 21 doit se trouver au plus près du récepteur solaire 10 afin de minimiser les pertes thermiques.

En outre, la pression dans la chambre haute température 30 est avantageusement inférieure à la pression dans le récepteur solaire 10. Ainsi, la forme de jet gazeux g est provoquée par la détente du fluide caloporteur f en sortie des moyens d'injection 20. Cette détente, de type Joule-Thomson est avantageusement permise en terminant la conduite par une simple buse. Les moyens d'injection 20 ont alors un effet comparable à celui d'une tuyère. Ils augmentent la régularité du jet gazeux, et facilitent la diffusion de son énergie thermique dans la chambre haute température 30 pour les besoins du processus.

La zone 31 de la chambre 30 où le gaz est injecté a avantageusement une position relativement centrale, de façon à éviter au maximum de chauffer les parois. Dans la figure 2, la zone 31 correspond à une zone de prémélange (voir plus loin).

Selon les besoins du processus industriel, il est tout à fait possible d'avoir plusieurs arrivées de gaz à haute température de façon à avoir plusieurs zones 31 d'injection, et donc plusieurs moyens d'injection 20 de fluide. La conduite peut se ramifier.

On notera qu'il est possible de choisir un fluide qui malgré les hautes températures qui règnent dans le récepteur 10 soit toujours à l'état liquide en entrée de la conduite, et qui se vaporise instantanément en entrant dans la chambre 30 suite à la détente.

Comme mentionné précédemment, la température du fluide caloporteur f à haute température est avantageusement comprise entre 1000°C et 2500°C selon la température de flamme requise par le processus industriel.

### Chambre haute température

Comme expliqué précédemment, le système selon l'invention peut être adapté à un grand nombre de processus industriels. Cette adaptation passe par le choix d'une chambre haute température 30 éventuellement spécifique du processus souhaité. On notera que l'invention n'est limitée à aucun processus industriel en particulier.

Par exemple, dans les domaines de la métallurgie, de la sidérurgie ou de la céramique, on peut choisir un fourneau comme chambre haute température 30, le processus industriel haute température étant un procédé d'obtention de matériau métallique ou céramique, comme la décarburation du minerai de fer pour la production d'acier (la chambre 30 est alors un haut-fourneau), ou la fusion de la silice pour la production de verre.

Alternativement, la chambre haute température 30 peut être un réacteur chimique, et le processus industriel haute température une réaction chimique endothermique.

### Réacteur chimique

L'utilisation du système solaire 1 selon l'invention pour mettre en oeuvre des réactions chimiques endothermiques est particulièrement intéressante de par la possibilité de choisir le fluide caloporteur, c'est-à-dire le ou les gaz qui constituent la flamme, contrairement au cas des combustions, où l'on a toujours affaire aux mêmes gaz (CO₂, CO, NOₓ, SOₓ...). Ces derniers sont des polluants qui entre autres se mélangent aux produits de la réaction et les contaminent. Ainsi, le fluide caloporteur f comprend avantageusement un gaz chimiquement inerte et/ou un réactif de ladite réaction chimique endothermique et/ou un produit de ladite réaction chimique endothermique. Il est donc possible d'avoir une réaction parfaitement contrôlée.

On peut en outre injecter au moins un réactif r de ladite réaction chimique endothermique dans le réacteur haute température 30 au niveau de la zone 31 d'injection du fluide caloporteur f à haute température mentionné précédemment. Ainsi, dans le cas d'une réaction à deux réactifs, on peut en utiliser un comme fluide caloporteur, et injecter le second dans la zone 31. On obtient alors un bon mélange dont l'un des réactifs est déjà à un haut niveau d'énergie. Il est aussi possible de moduler la position de l'injection du réactif (avec des injections plus ou moins proches de la flamme gazeuse). Cela est utilisé dans des processus industriels pour jouer sur la distribution en taille des particules produites qui sont alors soumises à des temps de séjour différents.

On peut en outre envisager qu'il y ait plus d'une chambre haute température 30a, 30b, etc. chacune étant un réacteur chimique, en particulier dans le cas des réactions complexes. On peut avantageusement monter ces réacteurs 30 en série, les produits du n-ième réacteur étant injectés dans le n+1-ième réacteur.

Par exemple, prenons le cas d'une réaction A + B + C → D, qui contiendrait les sous-réactions suivantes (X1 et X2 sont des intermédiaires réactionnels) :
A + B → X1
X1 + C → X2
X2 + A → D

On aurait trois réacteurs 30a,b,c mettant respectivement en oeuvre chacune de ces sous-réactions.

Un mode de réalisation avantageux serait d'utiliser B comme fluide caloporteur, de prévoir une injection de A dans le premier réacteur 30a et le troisième réacteur 30c, et une injection de C dans le deuxième réacteur 30b.

### Craquage du méthane

Le système solaire 1 selon l'invention est particulièrement adapté aux processus industriels de production d'hydrogène ou de nanoparticules de carbone à partir de précurseurs gazeux, souvent appelés « procédés furnace », ou « procédés au four » en français.

Ainsi, la réaction chimique endothermique préférée est le craquage du méthane pour la co-synthèse de dihydrogène et de noir de carbone : CH4(g) → 2H2(g)+C(s), ΔH°=75 kJ/mol

Avantageusement, le fluide caloporteur f est le dihydrogène, le méthane étant injecté dans le réacteur haute température 30. Tout autre gaz inerte stable à très haute température comme Ar, He, N2 peut également être utilisé comme fluide caloporteur f puis séparé pour recyclage en sortie du réacteur 30.

Si le système selon l'invention est particulièrement adapté, c'est parce que la mise en oeuvre de la réaction de craquage au niveau de parois conduit irrémédiablement à la croissance de dépôts pyrolytiques de carbone.

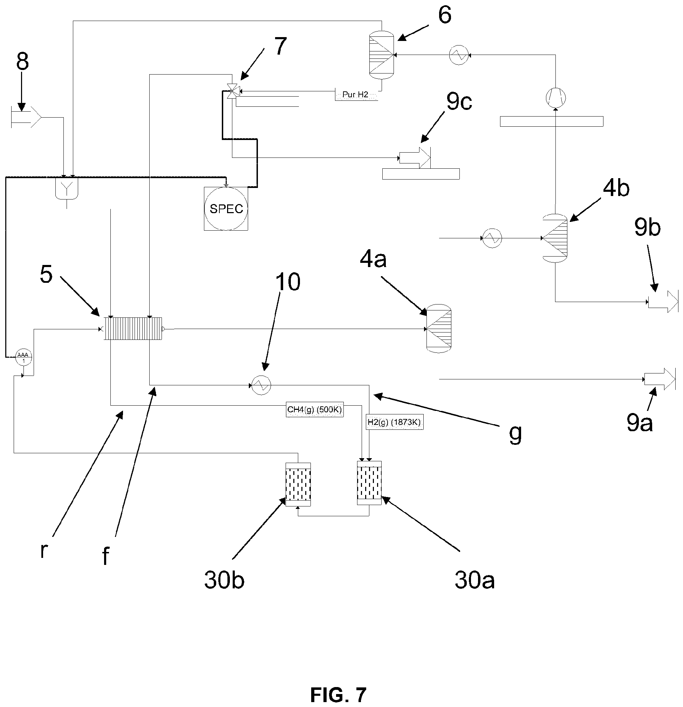

La figure 7 représente un plan de circulation des fluides (logiciel Prosim®) illustrant de façon particulièrement avantageuse l'intégration du système solaire 1 selon l'invention dans une installation industrielle de production d'hydrogène et de noirs de carbone.

En sortie du récepteur solaire 10, l'hydrogène est injecté sous forme de jet gazeux g à 1873°K. Ce gaz chaud est alors mélangé au méthane dans un réacteur haute température 30 adiabatique, symbolisé sur la figure 7 par deux réacteurs haute température 30a, 30b virtuellement consécutifs : la réaction de craquage comprend en effet deux étapes réactionnelles (qui pour autant ont lieu physiquement dans un même réacteur 30).

Dans le premier réacteur 30a, la réaction dite de couplage du méthane est réalisée. Deux molécules de méthane se « couplent » en une molécule d'acétylène : CH₄ → ½ C₂H₂ + ³/₂ H₂ (taux de réaction 0,9). Dans le second réacteur 30b, l'acétylène est dissocié en hydrogène et carbone C₂H₂ → H₂ + 2C (taux de réaction 0,9).

Le processus est contraint de sorte que la température en sortie de la zone réactionnelle, mesurée via un capteur, ne soit pas inférieure à 900°C (température minimale du procédé de production de noir de carbone appelé « Thermal black ») en asservissant le débit de recirculation de H2 caloporteur via la vanne trois voies 7 électroniquement contrôlée. Le débit de méthane, injecté au niveau de l'entrée 8, est quand à lui fixé ici à 400 kg/h.

Les produits doivent ensuite parcourir un séparateur 4a de type échangeur cyclonique qui permet de séparer les noirs de carbone des produits gazeux. Avant d'atteindre ce cyclone 4, un échangeur 5 (« Multi Fluid Heat Exchanger ») permet avantageusement de récupérer la chaleur des produits pour le préchauffage du réactif d'une part et du gaz à chauffer d'autre part.

Après le cyclone 4a, des filtres à manche 4b peuvent s'avérer nécessaires pour une filtration secondaire avant de purifier les produits gazeux dans une colonne d'adsorption modulée en pression 6 (pureté de H2 100%, taux de récupération 95%). Au préalable, les gaz doivent être compressés. Une partie de l'hydrogène purifié au niveau de la colonne 6 est recirculée en tant que fluide caloporteur f vers le récepteur solaire 10 après préchauffage au niveau de l'échangeur 5, l'autre partie est récupérée au niveau de la sortie 9c pour valorisation (production de 100 kg/h). La puissance requise pour le chauffage solaire de l'hydrogène au niveau du récepteur solaire 10 est de 2,5 MW. Les noirs de carbone récupérés au niveau du cyclone 4a (sortie de carbone 9a) et au niveau des filtres 4b (sortie de résidus de carbone 9b) peuvent ensuite être conditionnés (production de 300 kg/h).

Il est à noter que le processus de dissociation proposé ici est tout à fait similaire aux processus industriels classiques, seul l'apport de chaleur est différent : au lieu d'utiliser la combustion de sources fossiles pour chauffer le méthane, on injecte un fluide à haute température préalablement chauffé par énergie solaire concentrée. Ceci laisse ainsi la même flexibilité que celle que peut présenter le procédé au four traditionnel en termes de pré et post-traitements des produits (ex : post-traitement oxydant pour ajuster les propriétés du noir de carbone).

On rappelle que le système selon l'invention n'est en aucune manière limité au craquage du méthane, et l'homme de l'art saura l'adapter à la mise en oeuvre de tout processus industriel nécessitant une flamme de combustion.

### Procédé

Selon un deuxième aspect, l'invention concerne un procédé associé avec le système solaire selon le premier aspect de l'invention.

Il s'agit donc d'un procédé d'apport d'énergie volumique reproduisant l'effet d'une flamme de combustion pour un processus industriel à haute température, caractérisé en ce qu'il comprend des étapes de :
- irradiation d'un récepteur solaire 10 dans lequel circule un fluide caloporteur f par un rayonnement solaire concentré, de façon à porter le fluide caloporteur f à haute température ;
- injection du fluide caloporteur depuis le récepteur solaire 10 dans une chambre haute température 30 sous la forme d'un jet gazeux g reproduisant l'effet d'une flamme de combustion ;
- mise en oeuvre dudit processus industriel à haute température dans la chambre haute température 30 sous l'effet de la flamme de combustion produite.

Ce procédé reprend les mécanismes expliqués précédemment. Il s'applique aux mêmes processus industriels, et il est avantageusement mis en oeuvre par l'un des modes de réalisation de système solaire décrits précédemment.

## Revendications

1. Système solaire (1) permettant un apport d'énergie volumique reproduisant l'effet d'une flamme de combustion pour un processus industriel à haute température, comprenant un récepteur solaire (10) exposé à un rayonnement solaire concentré, **caractérisé en ce qu'**il comprend un fluide (liquide ou gazeux) caloporteur (f) porté à haute température ;
au moins une chambre haute température (30) dans laquelle est mis en oeuvre ledit processus industriel à haute température ;
des moyens d'injection (20) du fluide caloporteur (f) depuis le récepteur solaire (10) vers la chambre haute température (30), les moyens d'injection (20) étant agencés et configurés pour injecter le fluide caloporteur (f) sous la forme d'un jet gazeux (g) reproduisant l'effet d' une flamme de combustion dans l'au moins une chambre haute température (30).

2. Système selon la revendication 1, dans lequel le récepteur solaire (10) comprend une cavité (11), la cavité (11) étant pourvue d'une ouverture (12) transparente au rayonnement solaire concentré, et d'au moins un élément d'absorption solaire (13) irradié par le rayonnement solaire concentré à travers l'ouverture (12).

3. Système selon la revendication 2, dans lequel le ou les éléments d'absorption solaire (13) sont des tubes et/ou des canaux tapissant au moins une paroi de la cavité (11).

4. Système selon la revendication 3, dans lequel le fluide caloporteur (f) circule dans le ou les éléments d'absorption solaire (13), le fluide caloporteur (f) étant porté à haute température par transfert thermique au contact de la surface interne des éléments d'absorption solaire (13).

5. Système selon l'une des revendications 2 ou 3, dans lequel le fluide caloporteur (f) circule dans la cavité (11), l'ouverture (12) étant recouverte d'un hublot (14) transparent au rayonnement solaire concentré et étanche, et le fluide caloporteur (f) étant porté à haute température par transfert thermique au contact de la surface externe du ou des éléments d'absorption solaire (13).

6. Système selon la revendication 1, dans lequel le récepteur solaire (10) est traversé d'un canal dans lequel le fluide caloporteur (f) est en mouvement, le fluide caloporteur (f) étant porté à haute température par transfert thermique au contact de la surface interne d'une paroi du canal dont la surface externe est irradiée par le rayonnement solaire concentré.

7. Système selon l'une des revendications précédentes, dans lequel le fluide caloporteur (f) est injecté sous pression dans le récepteur (10) solaire.

8. Système selon la revendication 7, dans lequel les moyens d'injection (20) du fluide caloporteur (f) dans la chambre haute température (30) consistent en une conduite via laquelle le fluide caloporteur (f) à haute température s'échappe du récepteur solaire (10) vers la chambre haute température (30) sous l'effet de la pression interne dans le récepteur solaire (10).

9. Système selon la revendication 8, dans lequel la pression dans la chambre haute température (30) est inférieure à la pression dans le récepteur solaire (10), la forme de jet gazeux (g) étant provoquée par la détente du fluide caloporteur (f) en sortie des moyens d'injection (20).

10. Système selon l'une des revendications précédentes, dans lequel la chambre haute température (30) est un fourneau, et le processus industriel haute température est un procédé d'obtention de matériau métallique ou céramique.

11. Système selon l'une des revendications précédentes, dans lequel la chambre haute température (30) est un réacteur chimique, et le processus industriel haute température est une réaction chimique endothermique.

12. Système selon la revendication précédente, dans lequel le fluide caloporteur (f) comprend un gaz chimiquement inerte et/ou un réactif de ladite réaction chimique endothermique et/ou un produit de ladite réaction chimique endothermique.

13. Système selon l'une des revendications 11 ou 12, dans lequel au moins un réactif (r) de ladite réaction chimique endothermique est injecté dans le réacteur haute température (30) au niveau d'une zone (31) d'injection du fluide caloporteur (f) à haute température.

14. Système selon l'une des revendications 11 à 13, comprenant une pluralité de chambres haute température (30a, 30b...) étant chacune un réacteur chimique, les produits du n-ième réacteur (30) étant injectés dans le n+1-ième réacteur (30).

15. Procédé d'apport d'énergie volumique reproduisant l'effet d'une flamme de combustion pour un processus industriel à haute température, **caractérisé en ce qu'**il comprend des étapes de :
- irradiation d'un récepteur solaire (10) dans lequel circule un fluide caloporteur (f) par un rayonnement solaire concentré, de façon à porter le fluide caloporteur (f) à haute température ;
- injection du fluide caloporteur (f), depuis le récepteur solaire (10) dans une chambre haute température (30), sous la forme d'un jet gazeux (g) reproduisant l'effet d' une flamme de combustion ;
- mise en oeuvre dudit processus industriel à haute température dans la chambre haute température (30) sous l'effet de la flamme de combustion produite.

## Patentansprüche

1. Solarsystem (1), das einen Volumenenergieeintrag gestattet, welcher die Wirkung einer Verbrennungsflamme für einen industriellen Hochtemperaturprozess reproduziert, enthaltend
einen Solarempfänger (10), der einer konzentrierten Sonnenstrahlung ausgesetzt wird,
**dadurch gekennzeichnet, dass** das Folgende enthält:
ein (flüssiges oder gasförmiges) Wärmeträgermedium (f), das auf hohe Temperatur gebracht wird;
zumindest eine Hochtemperaturkammer (30), in welcher der industrielle Hochtemperaturprozess erfolgt,
Einspritzeinrichtungen (20) zum Einspritzen des Wärmeträgermediums (f) von dem Solarempfänger (10) in die Hochtemperaturkammer (30), wobei die Einspritzeinrichtungen (20) dazu angeordnet und ausgelegt sind, um das Wärmeträgermedium (f) in Form eines Gasstrahls (g) einzuspritzen, der die Wirkung einer Verbrennungsflamme in der zumindest einen Hochtemperaturkammer (30) reproduziert.

2. System nach Anspruch 1, wobei der Solarempfänger (10) einen Hohlraum (11) enthält, wobei der Hohlraum (11) mit einer Öffnung (12) versehen ist, die für konzentrierte Sonnenstrahlung durchlässig ist, sowie mit zumindest einem Solarabsorptionselement (13), das mit der konzentrierten Sonnenstrahlung durch die Öffnung (12) hindurch bestrahlt wird.

3. System nach Anspruch 2, wobei das bzw. die Solarabsorptionselemente (13) Rohre und/oder Kanäle sind, die zumindest eine Wand des Hohlraums (11) auskleiden.

4. System nach Anspruch 3, wobei das Wärmeträgermedium (f) in dem bzw. den Solarabsorptionselementen (13) strömt, wobei das Wärmeträgermedium (f) durch Wärmeübertragung in Kontakt mit der Innenfläche der Solarabsorptionselemente (13) auf eine hohe Temperatur gebracht wird.

5. System nach einem der Ansprüche 2 oder 3, wobei das Wärmeträgermedium (f) in dem Hohlraum (11) strömt, wobei die Öffnung (12) von einem Sichtfenster (14) überdeckt ist, das für konzentrierte Sonnenstrahlung durchlässig und abgedichtet ist, wobei das Wärmeträgermedium (f) durch Wärmeübertragung in Kontakt mit der Außenfläche des bzw. der Solarabsorptionselemente (13) auf hohe Temperatur gebracht wird.

6. System nach Anspruch 1, wobei der Solarempfänger (10) von einem Kanal durchsetzt wird, in welchem das Wärmeträgermedium (f) in Bewegung ist, wobei das Wärmeträgermedium (f) durch Wärmeübertragung in Kontakt mit der Innenfläche einer Wand des Kanals, dessen Außenfläche mit der konzentrierten Sonnenstrahlung bestrahlt wird, auf hohe Temperatur gebracht wird.

7. System nach Anspruch nach einem der vorangehenden Ansprüche, wobei das Wärmeträgermedium (f) unter Druck in den Solarempfänger (10) eingespritzt wird.

8. System nach Anspruch 7, wobei die Einspritzeinrichtungen (20) zum Einspritzen des Wärmeträgermediums (f) in die Hochtemperaturkammer (30) aus einer Leitung bestehen, über welche das Wärmeträgermedium (f) bei hoher Temperatur unter der Wirkung des Innendrucks in dem Solarempfänger (10) aus dem Solarempfänger (10) zur Hochtemperaturkammer (30) hin austritt.

9. System nach Anspruch 8, wobei der Druck in der Hochtemperaturkammer (30) geringer als der Druck in dem Solarempfänger (10) ist, wobei die Form des Gasstrahls (g) durch das Entspannen des Wärmeträgermediums (f) am Auslass der Einspritzeinrichtungen (20) bewirkt wird.

10. System nach einem der vorangehenden Ansprüche, wobei die Hochtemperaturkammer (30) ein Ofen ist und der industrielle Hochtemperaturprozess ein Verfahren zum Gewinnen eines metallischen oder keramischen Materials ist.

11. System nach einem der vorangehenden Ansprüche, wobei die Hochtemperaturkammer (30) ein chemischer Reaktor ist und der industrielle Hochtemperaturprozess eine endotherme chemische Reaktion ist.

12. System nach dem vorangehenden Anspruch, wobei das Wärmeträgermedium (f) ein chemisch inertes Gas und/oder ein Reagenz der endothermen chemischen Reaktion und/oder ein Produkt der endothermen chemischen Reaktion enthalt.

13. System nach einem der Ansprüche 11 oder 12, wobei zumindest ein Reagenz (r) der endothermen chemischen Reaktion in den Hochtemperaturreaktor (30) in Höhe eines Einspritzbereichs (31) des Wärmeträgermediums (f) bei hoher Temperatur eingespritzt wird.

14. System nach einem der Ansprüche 11 bis 13, enthaltend eine Mehrzahl von Hochtemperaturkammern (30a, 30b ...), die jeweils ein chemischer Reaktor sind, wobei die Produkte des n-ten Reaktors (30) in den n+1-ten Reaktor (30) eingespritzt werden.

15. Verfahren zum Volumenenergieeintrag, welcher die Wirkung einer Verbrennungsflamme für einen industriellen Hochtemperaturprozess reproduziert, **dadurch gekennzeichnet, dass** es die Schritte umfasst:
- Bestrahlen eines Solarempfängers (10), in welchem ein Wärmeträgermedium (f) strömt, mit konzentrierter Sonnenstrahlung, so dass das Wärmeträgermedium (f) auf eine hohe Temperatur gebracht wird;
- Einspritzen des Wärmeträgermediums (f) von dem Solarempfänger (10) in eine Hochtemperaturkammer (30) in Form eines Gasstrahls (g), der die Wirkung einer Verbrennungsflamme reproduziert;
- Durchführen des industriellen Prozesses bei hoher Temperatur in der Hochtemperaturkammer (30) unter der Wirkung der erzeugten Verbrennungsflamme.

## Claims

1. A solar system (1) for providing volumetric energy reproducing the effect of a combustion flame for a high-temperature industrial process, comprising a solar receiver (10) exposed to concentrated solar radiation, **characterised in that** it comprises a heat transfer fluid (liquid or gas) (f) being brought to high temperature;
at least one high-temperature chamber (30) in which said high-temperature industrial process is performed;
injection means (20) of the heat transfer fluid (f) from the solar receiver (10) to the high-temperature chamber (30), the injection means (20) being arranged and configured to inject the heat transfer fluid (f) in the form of a gas jet (g) reproducing the effect of a combustion flame in the at least one high-temperature chamber (30).

2. The system as claimed in Claim 1, in which the solar receiver (10) comprises a cavity (11), the cavity (11) being provided with an opening (12) transparent to concentrated solar radiation, and at least one solar absorption element (13) irradiated by the concentrated solar radiation through the opening (12).

3. The system as claimed in Claim 2, in which the solar absorption element or the solar absorption elements (13) are tubes and/or ducts lining at least one wall of the cavity (11).

4. The system as claimed in Claim 3, in which the heat transfer fluid (f) circulates in the solar absorption element or the solar absorption elements (13), the heat transfer fluid (f) being brought to high temperature by heat transfer in contact with the internal surface of the solar absorption elements (13).

5. The system as claimed in any one of Claims 2 or 3, in which the heat transfer fluid (f) circulates in the cavity (11), the opening (12) being covered with a porthole (14) transparent to concentrated solar radiation and sealed, and the heat transfer fluid (f) being brought to high temperature by heat transfer in contact with the external surface of the solar absorption element or solar absorption elements (13).

6. The system as claimed in Claim 1, in which the solar receiver (10) is traversed by a duct in which the heat transfer fluid (f) is in motion, the heat transfer fluid (f) being brought to high temperature by heat transfer in contact with the internal surface of a wall of the duct whereof the external surface is irradiated by the concentrated solar radiation.

7. The system as claimed in any one of the preceding claims, in which the heat transfer fluid (f) is injected under pressure into the receiver (10) solar.

8. The system as claimed in Claim 7, in which the injection means (20) of the heat transfer fluid (f) in the high-temperature chamber (30) consist of a conduit via which the high-temperature heat transfer fluid (f) escapes from the solar receiver (10) to the high-temperature chamber (30) under the effect of the internal pressure in the solar receiver (10).

9. The system as claimed in Claim 8, in which the pressure in the high-temperature chamber (30) is less than the pressure in the solar receiver (10), the form of gas jet (g) being caused by the detente of the heat transfer fluid (f) as it leaves the injection means (20).

10. The system as claimed in any one of the preceding claims, in which the high-temperature chamber (30) is a furnace, and the high-temperature industrial process is a process for obtaining metallic or ceramic material.

11. The system as claimed in any one of the preceding claims, in which the high-temperature chamber (30) is a chemical reactor, and the high-temperature industrial process is an endothermal chemical reaction.

12. The system as claimed in the preceding claim, in which the heat transfer fluid (f) comprises chemically inert gas and/or a reagent of said endothermal chemical reaction and/or a product of said endothermal chemical reaction.

13. The system as claimed in any one of Claims 11 or 12, in which at least one reagent (r) of said endothermal chemical reaction is injected into the high-temperature reactor (30) at the level of an injection zone (31) of the high-temperature heat transfer fluid (f).

14. The system as claimed in any one of Claims 11 to 13, comprising a plurality of high-temperature chambers (30a, 30b...) each being a chemical reactor, the products of the nth reactor (30) being injected into the n+1st reactor (30).

15. A process for providing volumetric energy reproducing the effect of a combustion flame for a high-temperature industrial process, **characterised in that** it comprises steps of:
- irradiation of a solar receiver (10) in which a heat transfer fluid (f) circulates by concentrated solar radiation to bring the heat transfer fluid (f) to high temperature;
- injection of the heat transfer fluid (f) from the solar receiver (10) into a high-temperature chamber (30) in the form of a gas jet (g) reproducing the effect of a combustion flame;
- performing said high-temperature industrial process in the high-temperature chamber (30) under the effect of the combustion flame produced.
